(19)

**Europäisches Patentamt**
**European Patent Office**
**Office européen des brevets**

(11) **EP 2 794 082 B1**

(12) **EUROPEAN PATENT SPECIFICATION**

(45) Date of publication and mention
of the grant of the patent:
**31.01.2018 Bulletin 2018/05**

(51) Int Cl.:
***B01J 8/00*** *(2006.01)*          ***C08F 2/34*** *(2006.01)*
***B65G 53/46*** *(2006.01)*

(21) Application number: **12813815.3**

(22) Date of filing: **19.12.2012**

(86) International application number:
**PCT/EP2012/076067**

(87) International publication number:
**WO 2013/092652 (27.06.2013 Gazette 2013/26)**

(54) **CONTINUOUS FEED METERING DEVICE**

KONTINUIERLICHE ZUFUHRMESSVORRICHTUNG

DISPOSITIF DE MESURE D'ALIMENTATION CONTINUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2011 EP 11194637**

(43) Date of publication of application:
**29.10.2014 Bulletin 2014/44**

(73) Proprietor: **Total Research & Technology Feluy
7181 Seneffe (BE)**

(72) Inventors:
• **BOUQUOYOUE, Yahya**
**B-1410 Waterloo (BE)**
• **FERNANDEZ, Alvaro**
**B-1400 Nivelles (BE)**

(74) Representative: **Gyi, Jeffrey Ivan et al
De Clercq & Partners
Edgard Gevaertdreef 10 a
9830 Sint-Martens-Latem (BE)**

(56) References cited:
**EP-A1- 0 879 638      WO-A1-2008/145601
US-A- 3 139 996      US-A- 5 738 249**

**Description**

**FIELD OF THE INVENTION**

The present invention relates to a delivery system for dispensing continuously a controlled amount of dry or slurried particulated material. The present invention especially relates to a catalyst delivery means for introducing a catalyst into a polymerization reactor.

**BACKGROUND OF THE INVENTION**

Many manufacturing processes rely on dispensing in a controlled manner a particulated material for a downstream application. Processes may be sensitive to the quantity of particulated material introduced, therefore, it is important to control its flow and to minimize any changes to the flow rate. In particular, reactions such as polymerization are sensitive to the quantity of catalyst introduced. It is important to control catalyst flow to a reactor since unexpected or uncontrolled catalyst injection in a reactor could lead to reactions that exceed cooling capacity of the reactor.

Typically, a metering system is employed for dispensing particulated material, that utilizes a feeder, such as a quantitative powder feeder, based on a rotary system. Rotary systems generally comprise either a rotary valve typically having a plurality of blades radially mounted, or a rotating cylinder with chambers.

When the dry or slurried particulated solid to be fed has low fluidity, is sticky or viscous, adhesion of powder to the feeder can occur. This induces mechanical wear of equipment and unstable feeding of catalyst leading ultimately to unstable reactor operations.

Moreover, such systems deliver a fixed amount of particulated material discontinuously to a reactor; in other words, there are regular changes in the rate of flow. This can have an effect on downstream applications. For instance, it is well known in the industry that feeding a catalyst discontinuously to a polymerization reactor implies difficulties in maintaining constant reaction conditions and stable operations.

For example, US 5,738,249 discloses a rotor accommodated in a casing having a circumferential surface sliding on the internal surface of the casing in airtight condition; the casing is provided with a powder feed part positioned above the rotor and is provided with a powder drop part positioned under the rotor. At least one quantity-measuring recessed part is formed in the slide surface of the rotor. In accordance with the rotation of the rotor, the quantity-measuring recessed part comes to communicate with the powder feed part, so that powder is fed from the powder feed part into the quantity-measuring recessed part. When the rotation is advanced, the quantity-measuring recessed part comes to communicate with the powder drop part, so that the powder drops from the quantity-measuring recessed part through the powder drop part into a high-pressure part arranged thereunder.

US 5,738,249 in FIG. 7 describes that at least two rows of quantity-measuring recessed parts can be provided along the axial direction of the rotor (22), a plurality of powder feed parts (27) and feed holes (25) can be provided for communication with the quantity-measuring recessed parts, and also a plurality of drop holes can be provided. As illustrated in FIG. 7 of US 5,738,249, the drop holes 29 may be combined to open into a single Y-shaped powder drop part (30), or alternatively, a plurality of powder drop parts (30) may be provided and arranged in mutually twisted relationship so as to be connected to a single feed pipe (19) (not shown). As shown in FIG. 7 of US 5,738,249, the rotor chambers are mutually aligned, thereby dispensing powder synchronously. Since the mutually twisted powder drop parts merely convey the powder from the drop holes to a single feed pipe, there is no change in the synchronicity of flow from the rotor, *i.e.*, the flow is interrupted in US 5,738,249.

The present invention provides means to effectively reduce unstable operations.

The present invention provides means to solve both problems, while maintaining accurate dosing. It is an object of the present invention to provide for a system for dispensing a particulated material wherein an essentially continuous and stable flow of particulated material is ensured.

**SUMMARY OF SOME ASPECTS OF THE INVENTION**

The present invention relates to a device (200) for dispensing a particulated material comprising:

- at least two rotary valves (100, 100'), each having a stator (10, 10') provided with an inlet (12, 12') and outlet (14, 14') for the particulated material, and a rotor (20, 20') seated in the stator (10, 10') sealing the inlet (12, 12') from the outlet (14, 14'), each rotor disposed with at least one chamber (22, 22') for receiving and dispensing the particulated material as the rotor (20, 20') turns around its central axis (A-A'),

- wherein the rotors (20, 20') are configured to rotate synchronously,

- wherein the chambers (22, 22') of at least two rotors (20, 20') are configured to dispense particulated material asynchronously, and

- wherein the rotors (20, 20') of the device (200) are configured such that the combined flow of particulated material is essentially continuous.

The use of fewer, larger chambers allows effective capture and discharge of large particulated material. The rate of rotation can be reduced while not affecting flow of particulated material, thereby reducing wear. The continuous and preferably constant flow of particulated material maintains stable reaction conditions for a variety of downstream applications, in particular, for reactions where the particulated material is a catalyst.

A first rotor (20) of said at least two rotors (20, 20') is preferably aligned around its central (A-A') axis with respect to a second rotor (20') of the at least two rotors such that the chambers (22, 22a, 22b, 22b) of the first rotor (20) are aligned with the circumferential spaces (23') between the chambers (22', 22'a, 22'b) of the second rotor (20') of the pair.

The device (200) as described above may have any number of rotary valves (100, 100'), wherein the rotor (20, 20') of each valve (100, 100') is provided with any number of chambers (22, 22') evenly or unevenly distributed around the rotor circumference.

The device (200) as described above may have n number of rotary valves (100, 100'), wherein the rotor (20, 20') of each valve (100, 100') is provided with the same number of chambers (22, 22') (e.g., 1, 2, 3, 4, 5, 6, 7, 8, or more) evenly distributed around the rotor circumference, whereby each rotor is revolutely offset from an adjacent rotor by an angle of (360/number of chambers)/n.

The device (200) as described above may have two rotary valves (100, 100'), wherein the rotor (20, 20') of each valve (100, 100') is provided with the same number of chambers (22, 22') (e.g., 1, 2, 3, 4, 5, 6, 7, 8, or more) evenly distributed around the rotor circumference, whereby the rotors are revolutely offset by an angle of (360/number of chambers)/2.

Each of the at least two rotors (20, 20') of the device (200) described above preferably has an identical arrangement of chambers.

The device (200) as described above preferably has two rotary valves (100, 100'), wherein the rotor (20, 20') of each valve (100, 100') is provided with 4 chambers (22, 22') evenly distributed around the rotor circumference.

The rotors (20, 20') of the device (200) described above are preferably in fixed revolute offset by 45 deg around their respective central axes (A-A').

Each inlet (12, 12') of the device (200) described above is preferably configured for attachment to an outlet (54, 54') of a hold tank (50).

The inlet (12, 12') and outlet (14, 14') of the device (200) described above are preferably diametrically opposed in relation to the (rotational) centre of the rotor (20, 20') and arranged on an axis vertical and perpendicular to the central axis (A-A') of the rotor, so that the filling and emptying of the chamber is provided by the force of gravity exerted on the particulated material.

The central axes (A-A') of the rotors (20, 20') of the device (200) described above are preferably in co-axial alignment.

The rotors (20, 20') of the device (200) described above are preferably at least partly formed from a metal or metal alloy.

A rotor (20, 20') of the device (200) described above preferably comprises, at least in part, a cylindrical, rounded or truncated-conical region onto which the chambers (22, 22') are disposed.

The device (200) as described above, preferably further comprises a pair of sealing rings (28, 28a, 28b) disposed around the circumference of each rotor (20, 20'), flanking the circumferential region on which orifices to the chambers (22, 22a, 22b, 22c) are provided.

The sealing rings (28, 28a, 28b) of the rotors of the device (200) described above are preferably formed from any of polyamide, polyacetal, polyester, high density polyethylene, polytetrafluoroethylene or aromatic polyketones.

The chambers (22, 22') of each rotor (20, 20') of the device (200) described above are preferably at least partly spherical or at least partly ovoid.

The present invention also relates to a method for dispensing a particulated material comprising the steps:

- providing a device (200) having at least two rotary valves (100, 100'), each having a stator (10, 10') provided with an inlet (12, 12') and outlet (14, 14') for the particulated material, and a rotor (20, 20') seated in the stator (10, 10') sealing the inlet (12, 12') from the outlet (14, 14'), each rotor disposed with at least one chamber (22, 22') for receiving and dispensing the particulated material as the rotor (20, 20') turns around its central axis (A-A'),

- turning the rotors (20, 20') synchronously,

- dispensing particulated material asynchronously from the chambers (22, 22') of at least two rotors (20, 20'), such that the combined flow of particulated material from the device is essentially continuous.

The device of the method described above is preferably as defined above.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. The description is only given by way of example and does not limit the invention. The reference numbers relate to the hereto-annexed figure.

## BRIEF DESCRIPTION OF THE DRAWINGS

FIG. 1 is a part cross-section along a longitudinal, vertical plane of a device described herein, depicting the rotors in perspective view whereby the rotors are at least partly conical.

**FIG. 2** is a part cross-section along a longitudinal, vertical plane of a device described herein, depicting the rotors in perspective view whereby the rotors are conical.

**FIG. 3** is a part cross-section along a longitudinal, vertical plane of a device described herein, depicting the rotors in perspective view whereby the rotors are partly conical and the base of each cone is extended cylindrically outwards.

**FIG. 4** is a part cross-section along a longitudinal, vertical plane of a device described herein, depicting the rotors in perspective view whereby the rotors are cylindrical.

**FIG. 5** shows the device of FIG. 2 connected to a hold tank having two outlets.

**FIG. 5A** shows the device of FIG. 2 connected to a hold tank having a single outlet split into two using a splitter line.

**FIG. 6** depicts a perspective view of a cylindrical rotor described herein, removed from the stator housing.

**FIG. 7** depicts a perspective view of two cylindrical rotors of the invention joined co-axially.

**FIG. 8** shows a notation for depicting the revolute offset between two rotors. The rotor closest to the line of sight in FIG. 6 is depicted with a smaller profile, the rotor further from the line of sight and behind the first rotor is depicted with a larger profile. The angle of offset, beta, is shown as the rotation between the smaller and larger profiles.

**FIG. 9** is view of a rotor along the central axis (A-A') axis, with circumferential surface arcs delta and gamma indicated.

**FIG. 10** depicts a perspective view of a conical rotor, and shows the slope angle, epsilon.

## DETAILED DESCRIPTION OF THE INVENTION

Before the device of the present invention is described, it is to be understood that this invention is not limited to particular devices and uses thereof described, as such devices and uses may, of course, vary.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

In the following detailed description of the invention, reference is made to the accompanying drawings that form a part hereof, and in which are shown by way of illustration only of specific instances in which the invention may be practiced. It is to be understood that other aspects may be utilized and structural or logical changes may be made without departing from the scope of the present invention. The following detailed description, therefore, is not to be taken in a limiting sense, and the scope of the present invention is defined by the appended claims.

The present invention provides a device for continuously dispensing a particulated material, which device has two or more rotary metering valves, each valve provided with a rotor having a plurality of discrete circumferentially arranged chambers - dosing chambers - for receiving and dispensing the particulated material as the rotor turns around its central axis. The synchronous revolution of the rotors, the arrangement of chambers, and the alignment of rotors with respect to each other dispenses the particulated material asynchronously with respect to each rotor, and the combined flow over a revolution is essentially continuous. The use of fewer, larger chambers allows effective capture and discharge of particulated material. The rate of rotation can be reduced while not affecting flow of particulated material, thereby reducing wear. The continuous flow of particulated material maintains stable conditions for downstream processing.

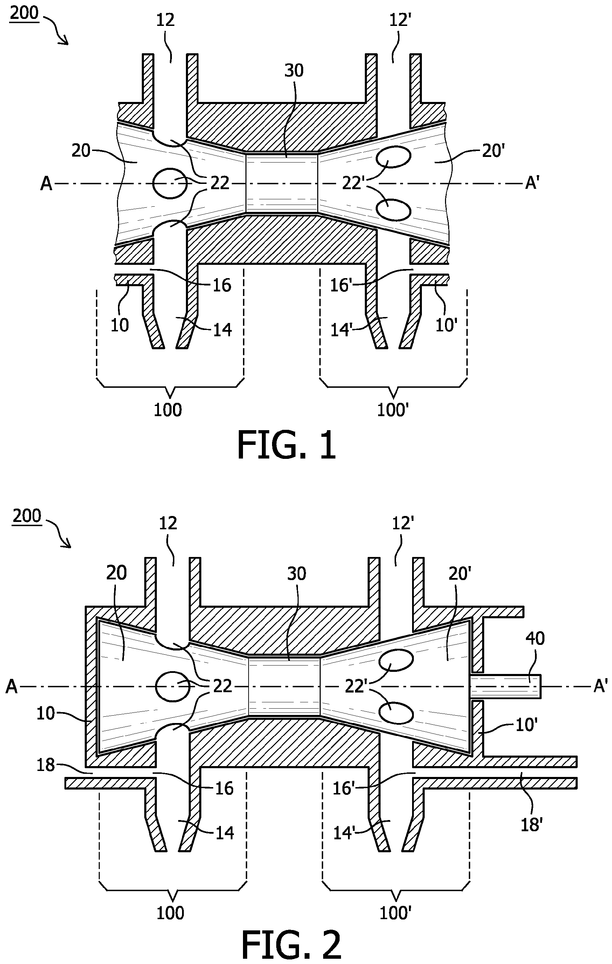

With reference to **FIG. 1** present invention provides a device **200** for dispensing a particulated material, which device comprises:

- at least two rotary valves **100, 100',** each having a stator **10, 10'** provided with an inlet **12, 12'** and outlet **14, 14'** for the particulated material, and a rotor **20, 20'** seated in the stator **10, 10',** sealing the inlet **12, 12'** from the outlet **14, 14',** each rotor disposed with at least one chamber **22, 22'** for receiving particulated material through the inlet **12, 12'** and dispensing it through the outlet **14, 14'** as the rotor **20, 20'** turns around its central axis **A-A'** or axis of rotation, and whereby the rotors **20, 20'** are configured to rotate synchronously.

The chambers **22, 22'** of each rotor **20, 20'** are configured to dispense particulated material asynchronously. In this regard, at least two rotors **20, 20'** may be offset around their respective central axes **A-A'** such that the respective chambers **22, 22'** dispense particulated material asynchronously They are further configured to provide a combined flow of particulated material from the rotors **20, 20'** that is essentially continuous. The stator outlets **14, 14'** discharge into the reactor (not shown). In **FIG. 1,** there are provided two valves **100, 100',** and the rotors **20, 20'** are joined by a connecting shaft **30.** The rotors **20, 20'** have, at least in part, a truncated conical region; the smaller (truncated) conical ends point towards each other. The longitudinal outer ends of the device **200** are shown in part; it would be understood that the rotors **20, 20'** may optionally extend longitudinally outwards, and may be enclosed in the respective stators **10, 10'.** The rotors **20, 20'** in **FIG. 1** have a truncated conical shape; it is appreciated that other suitable shapes may be employed that have a circular transverse profile such as cylindrical, oval, spherical.

**FIG.2** shows a two valve **100, 100'** arrangement of **FIG. 1,** where the rotors **20, 20'** have a truncated conical shape, and are enclosed in the respective stators **10, 10'.**

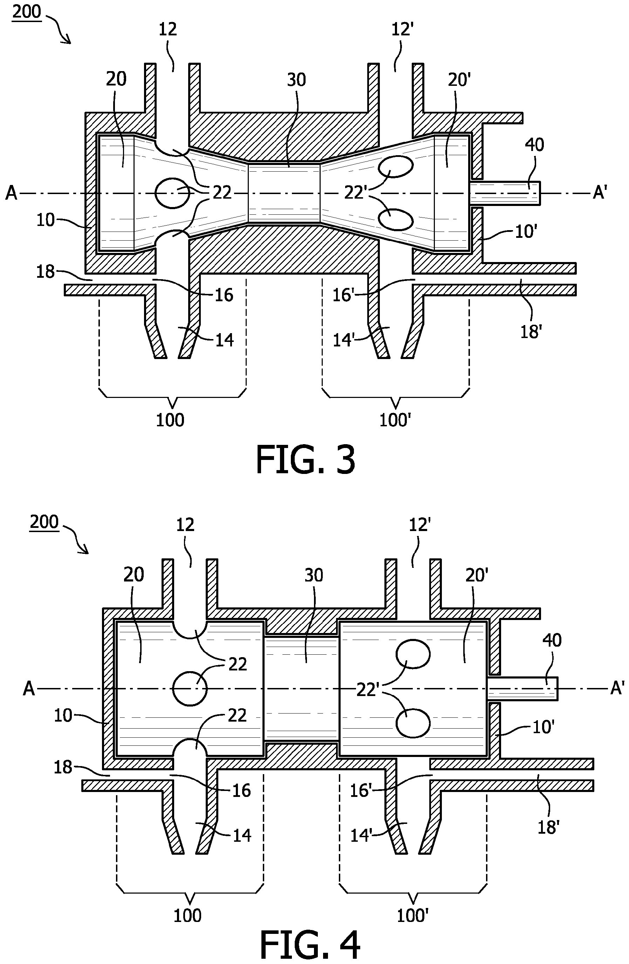

**FIG.3** shows a two valve **100, 100'** arrangement of **FIG. 1,** where the rotors **20, 20'** extend cylindrically longitudinally outwards from the base of the respective truncated conical regions, and are enclosed in the respective stators **10, 10'.**

**FIG.4** is similar to the two valves **100, 100'** arrangement of **FIG. 2,** except the rotors **20, 20'** have a cylindrical shape.

The particulated material refers to a substance that is powered, granulated, flaked, ground or other form of particulated solid that has flowability. The particulated material may be provided in a dry state or in a slurry, for example, diluted in an oil. The particulated material may be any required in a steady and controllable supply by a downstream (subsequent) processing application. The particulated material may be a catalyst. The present invention is particularly useful for the delivery of catalyst to a polymerization reactor for gas or liquid phase polymerization, however, it is not necessarily limited thereto. Using the device makes it possible to dispense reliably and continuously determined quantities of particulated material.

Each inlet of the stator may be fluidically connected to an outlet of a gravity-fed hold tank, in which the particulated material is stored prior to dispensing. The hold tank has an opening at the top for filling, and one or more tank outlets towards or at the base where particulated material exits. There may be a single holding tank where multiple outlets are provided for each stator inlet. Alternatively, there may be multiple hold tanks, each provided with a single outlet for each stator inlet. An outlet of the hold tank may connect to a single stator inlet. Alternatively, an outlet of the hold tank may connect to more than one (*e.g.* 2, 3, 4, 5, 6 or more) stator inlets; this may be achieved using a splitter line, having one or more splitter inlets for connection to one or more outlets of the holding tank(s), and two or more splitter outlets for connection to two or more stator inlets. Within the splitter line, the splitter line outlets are in fluid connection with the splitter line inlets. Where a splitter line is used, the number of splitter line inlets is less than the number of splitter line outlets. In this way, a limited number of tank outlets can serve a greater number of stator inlets, more specifically, a single tank outlet can serve multiple stator inlets. Preferably, the splitter line comprises a bifurcated tube having one splitter line inlet and two splitter line outlets. The hold tank is adapted to provide flowability of particulated material. To this end, the base of the tank may have sloping walls to funnel particulated material toward each outlet. Where the particulated material is a dry powder, the base of the tank may be provided with one or more gas ports for dispensing pressurized gas pulses into the tank either to increase flowability or to break any agglomerates. The gas used may be any inert gas such as nitrogen.

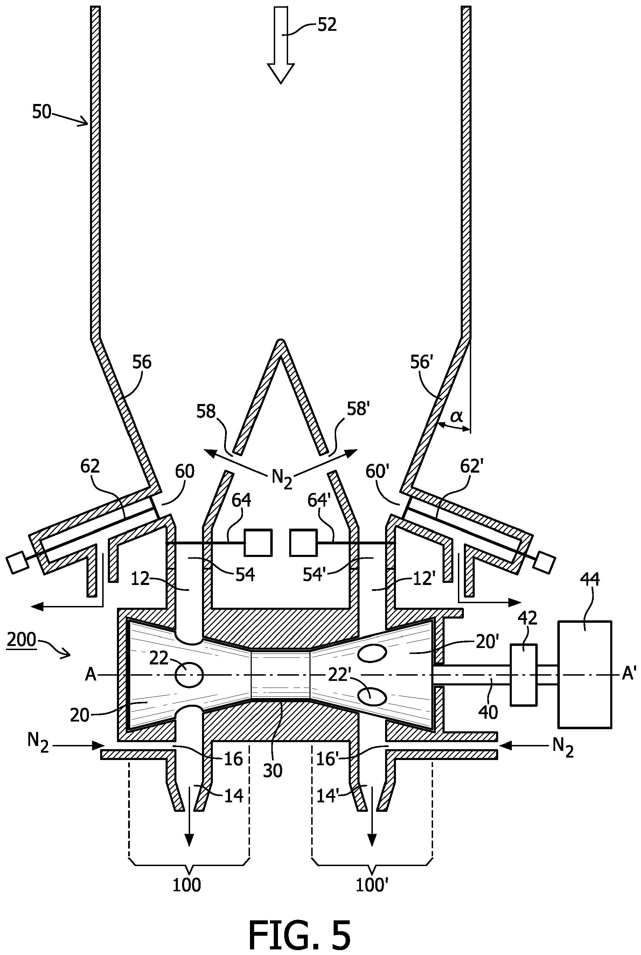

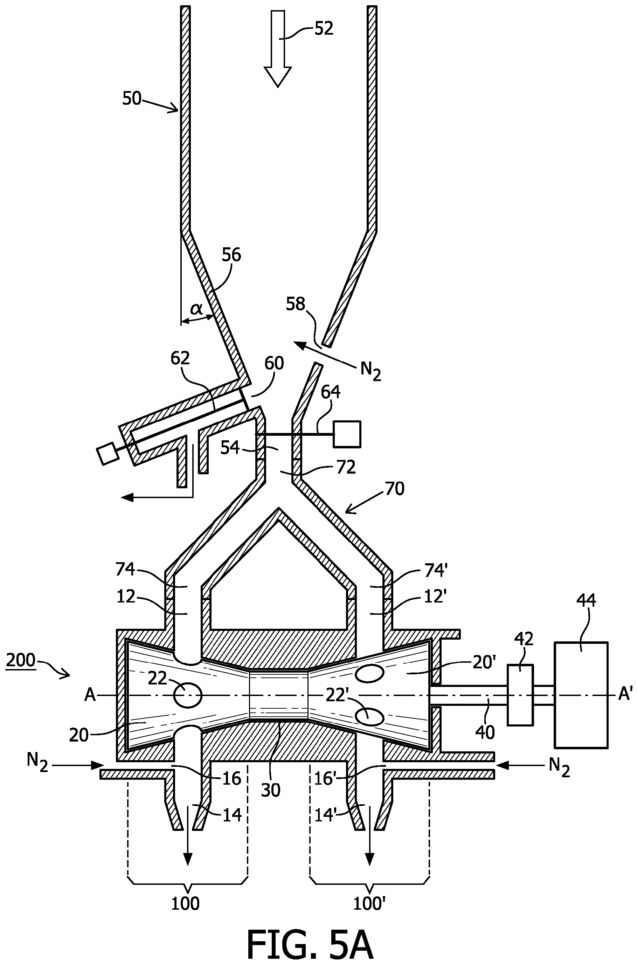

In **FIG. 5,** a single hold tank **50** is operatively connected to the device **200** of the instant invention, as shown in **FIG. 1.** A first tank outlet **54** is fluidically connected to a first stator inlet **12,** and a second tank outlet **54'** is fluidicly connected to a second stator inlet **12'.** The tank as illustrated has an open filling end **52,** however, it may equally be covered and/or sealed. The lower walls **56, 56'** slope at an angle, alpha, towards each tank outlet **54, 54'** to facilitate discharge. The angle, alpha, between the straight wall of the upper part of the tank, and the sloped wall of the lower part of the tank, is preferable less than or equal to 5 deg, 10 deg, 15 deg, 20 deg, 25 deg, 30 deg, or a value in the range between any two of the aforementioned values. A gas inlet port **58, 58'** located proximal to each tank outlet **54, 54'** supplies nitrogen pulses for agitation. A piston valve **62, 62'** allows rapid emptying of the holding tank through; this is utilized, for example, when a changeover of particulated material is planned through a set of exit ports **60, 60'.** Valves **64, 64'** control the passage of particulated material towards the outlet **54, 54';** preferably they are bistable valves *i.e.* they are either open or closed. Such bistable configuration allows feeding system to be isolated from the holding tank, in case of maintenance for instance. The rotors **20, 20'** of the device are joined by a connecting shaft **30,** and a drive shaft **40** is connected to one rotor **20'.** The drive shaft is connected to a gear box **42,** which in turn is driven by a motor **44.** The rotors **20, 20'** have a truncated conical shape; it is appreciated that other suitable shapes may be employed that have a circular transverse profile.

**FIG. 5A** is similar to **FIG. 5** except the hold tank **50** and device **200** are connected using a splitter line **70.** The hold tank **50** is provided with one outlet **54** fluidically connected to a splitter line **70** having one inlet **72** that splits into multiple (*i.e.* two) outlets for fluidic connection to the stator inlets **12, 12'.** More specifically, the outlet **54** of the hold tank **50** is connected to a splitter line inlet **72,** and each of the stator inlets **12, 12'** is connected to a splitter line outlet **74, 74'**. The splitter line comprises a bifurcated tube. In this way, a single outlet serves multiple stator inlets.

Each stator is a stationary housing for a rotor, providing a seat in which the rotor is mounted and revolves. The stator comprises a stator inlet, configured for fluid connection with an outlet of the holding tank. The stator also comprises a stator outlet for discharging the particulated material. The stator inlets and outlets are preferably circular ports. They may be equal in diameter. The stator inlet and outlet for the particulated material are preferably located at the top and the bottom respectively of the stator. Preferably, they are diametrically opposed in relation to the centre of the rotor and arranged on an axis vertical and perpendicular to the axis of rotation of the rotor, so that the filling and emptying of the chamber is provided by the force of gravity exerted on the free-flowing particulated material. The inlet and outlets of the stator may be essentially rectangular or circular, and of equal size. The stator may be provided with one or a plurality of gas outlet ports, directed in the vicinity of the outlet, to flush discharged particulated material from the chamber. The ports may dispense inert gas (*e.g.* nitrogen) as short pressured pulses. There are at least two stators (*e.g.* 2, 3, 4, 5 or more), the preferred number of stators being two. Stators may be provided separately or as a single housing, depending on the configuration of the rotors. When the rotors are connected by a long shaft, it may necessitate that stators are discrete, separate elements. Alternatively, when the rotors are manufactured from a single cylindrical member, the stators may be joined to form a single, continuous housing.

In **FIG. 2 to 4,** two stators **10, 10'** are joined side-by-side along the central axis **(A-A')** to form a single continuous housing that accommodates two rotors **20, 20'** co-axially joined. Each stator **10, 10'** is provided with a stator inlet **12, 12'** and a stator outlet **14, 14'** for the particulated material, and has a seating for a rotor **20, 20'**. Each stator outlet **14, 14'** is disposed with a gas inlet port **16, 16'** connected to a feeding line **18, 18',** to flush discharged particulated material from the chamber **22, 22'**.

Each rotor is seated in a corresponding stator. It seals the stator inlet from the stator outlet. Each rotor has a central axis (A-A'), which is co-axial with the axis of rotation of the rotor. Preferably, the central axis is horizontal. By seals, it is meant that rotor acts as a barrier preventing the free flow of particulated material from the stator inlet to the stator outlet. There are at least two rotors (*e.g.* 2, 3, 4, 5 or more), the preferred number of rotors being two. The rotor is preferably formed at least partly, preferably entirely, from a metal or metal alloy, for example, stainless steel, which provides durability and robustness. Preferably the two or more rotors are in co-axial alignment. Preferably they are rigidly connected, for example, by way of a shaft, by adjacent rigid connection, or by virtue of manufacture from a single cylindrical element. The rigid connection allows synchronous rotation of the rotors, *i.e.* they rotate in unison, at the same speed. The rotors are driven by a source of torque, such an electric or turbine motor, directly or *via* a gearbox.

Any suitable shape of rotor may be employed that has a circular transverse profile. A rotor may comprise, at least in part, a cylindrical, rounded (truncated-spherical) or truncated-conical region onto which the chambers are disposed. A truncated conical region refers to a cone-shape in which the point of the cone is truncated. The truncated part is preferably planar and parallel to the base of the cone. Preferably all the rotors have the same shape and dimensions.

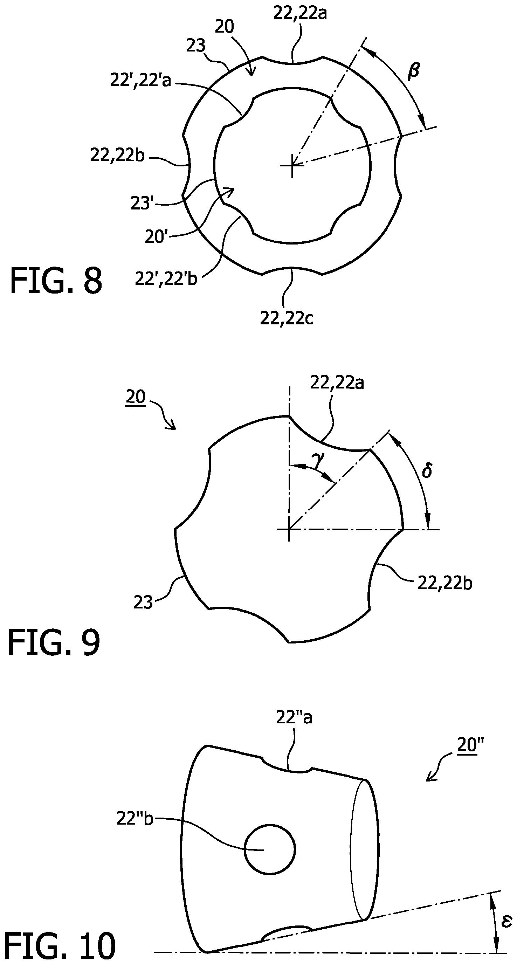

Where said region is truncated-conical, as shown, for example, in **FIG. 10** the cone **20''** may slope from horizontal when the central axis of the rotor is horizontal. The slope angle, epsilon, is the slope of the cone compared with an axis parallel to the central axis of the cone, as shown in **FIG. 10.** Epsilon may have a value in degrees in the range between any two of the following values: 9, 10, 11, 12, 13, 14, or 15. Where the region is truncated-conical, each rotor may be oriented in the same direction *i.e.* the smaller end of the cone pointing the same direction. Alternatively, two or more rotors may be oriented in different directions *i.e.* the smaller end of the cone pointing away or towards each other. Preferably, the small ends of the cones point towards each other.

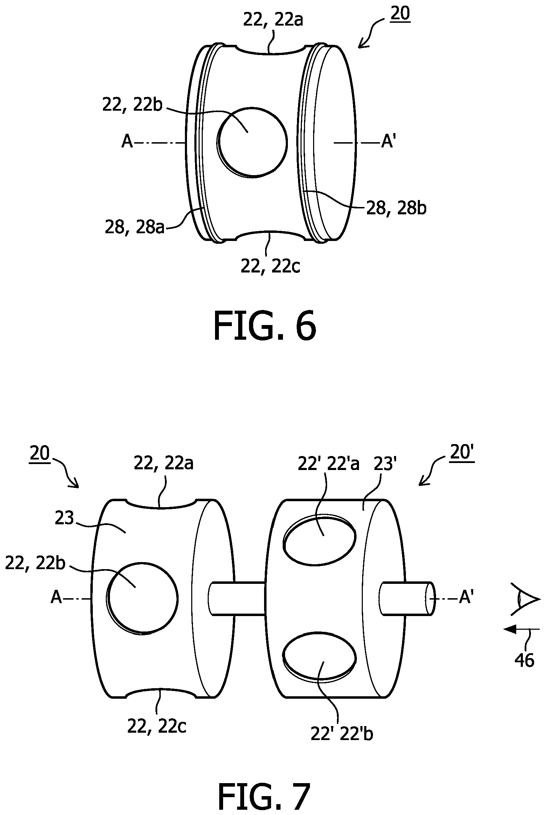

In **FIG. 1,** two rotors **20, 20'** each comprise a truncated conical region. In **FIG. 2,** two rotors **20, 20'** each comprise a truncated conical region and a cylindrical region adjoining the base of the cone. In **FIG. 3,** two rotors **20, 20'** each have a truncated conical shape. In **FIGs. 1** to **3** the smaller ends of the rotors **20, 20'** point towards each other and are joined co-axially. In **FIG. 4,** two rotors **20, 20'** each have a cylindrical shape and are joined co-axially. In **FIG. 6,** a cylindrical rotor **20** is shown devoid of the stator, and comprises four chambers **20,** three of which **20a, 20b, 20c** are in view.

Each rotor is provided with at least one chamber for receiving and dispensing the particulated material as the rotor turns around its central axis. A chamber is a cavity of defined volume set into the body of the rotor, with an orifice on the cylindrical rotor surface. When a chamber is at the top of its rotation cycle, the chamber orifice is aligned with the stator inlet. In this position, particulated material flows from the tank and into the chamber. As the chamber rotates away from the stator inlet, it is closed off by the stator housing and excess particulated material is removed from the chamber surface. At or towards the bottom of the rotation cycle, the orifice of the chamber aligns with the stator outlet. In this position, particulated material is discharged through the outlet and into the reactor. Metering valves, and the cycle of loading and discharging is well known in the field.

While there are preferably four chambers per rotor, the invention is not necessarily limited thereto, and other numbers are envisaged (*e.g.* 1, 2, 3, 5, 6, 7, 8 or more chambers per rotor). The number may depend upon factors such as size of particulated material (flowability), the requisite flow rate, and the maximum rotation speed of the rotor accounting for minimal wear and particulated material attrition.

If the rotor comprises more than one chamber, they are preferably distributed evenly around the circumference of the rotor, and are preferably arranged in a common plane transverse to the central axis of the rotor. The stator inlet and outlet are also aligned in the same plane.

The chambers are preferably circumferentially distanced from each other in a rotor of a rotary valve, in a manner such that at any instant during the rotation of the rotor, the stator inlet and the stator outlet of the rotary valve can each be placed only in communication with a single chamber. In this case, it is preferable that at the moment when one chamber is placed in communication with the stator inlet, another chamber of the same rotor is in communication with the stator outlet.

Irrespective of the number of rotors and chambers per rotor, it is clear to the skilled person that the chambers are spaced around the circumference of each rotor in such a way that a continuous and preferably constant flow of particulated material to the stator outlet is assured.

A chamber may have an essentially circular or rectangular orifice at the surface of the rotor, which leads to the chamber void. The size of the orifice is less than or preferably equal to the size of the stator outlet. The volume of a chamber depends upon the application, and the determination of chamber volume, rotor speed etc. is well within the capabilities of the skilled person.

The shape of the chamber may be conical, cylindrical, spherical, ovoidal, truncated spherical (*e.g.* semi-spherical), truncated ovoid (*e.g.* semi-ovoidal) or truncated cone. Preferably, said shape is semi-spherical or semi-ovoidal.

The sealing effect of the rotor **20, 20'** may be enhanced when the rotor comprises a truncated conical region (*e.g.* **FIGs. 1** to **3**). The stator **10, 10'** seat has a reciprocating conical shape, therefore, linear force applied to the longitudinal end of the rotor **20, 20'** in a direction from the base to the small end of the truncated conical region will decrease a working gap between the rotor **20, 20'** and stator **10, 10'**. Thus, by applying a certain force, the rotor **20, 20'** may be seated optimally in stator **10, 10',** continually and over the lifetime of the rotor **20, 20'**. The force may be applied using a spring.

Sealing effect of the rotor may be enhanced by the provision of one or more sealing rings. A pair of sealing rings may be disposed around the circumference of each rotor, flanking the circumferential region where the chamber orifices are provided. Alternatively, or in addition, a sealing ring may be provided around the orifice of each chamber. A sealing ring can be made from any material having the requisite durability and friction reducing qualities. Suitable material include polyamide (ERTALON), polyacetal (ERTACEL), polyester (ERTALYTE), polyethylene high density (CESTILITE), polytetrafluoroethylene (FLUOROSINT) and aromatic polyketones (KETRON). In **FIG. 6,** pair **28a, 28b** of sealing rings **28** disposed around the circumference of the rotor **20,** flanking the circumferential region where the chambers **22, 22a, 22b, 22c** are provided. The seal ring is preferably applied when the rotor has a cylindrical shape.

The rotors are configured to rotate synchronously *i.e.* in unison, at the same rate. At least two rotors are aligned with respect to each other, such that the respective chambers dispense particulated material asynchronously (at different times), and the flow of particulated material from the combination of rotors is essentially continuously. By asynchronously, it is mean that one or more of the start, duration and end of the dispensing period is different between the two rotors. Preferably, the rotors dispense alternately (two rotors), tandemly (more than two rotors) or in any pattern (more than two rotors), the net effect being an essentially continuous flow, spatially separated along the central axes of the two or more rotors. To achieve a continuous flow with two rotors, the chambers of one rotor may be in fixed revolute offset with respect to each other, so as to dispense in the periods where the chambers of the other rotor have stopped dispensing.

According to one embodiment, n number of rotary valves 100, 100' (*e.g.* 2, 3, 4, 5, 6, 7, ot 8 or more) are provided, wherein the rotor (20, 20') of each valve (100, 100') is provided with the same number of chambers (22, 22') (*e.g.,* 1, 2, 3, 4, 5, 6, 7, 8, or more) evenly distributed around the rotor circumference, whereby each rotor is revolutely offset from an adjacent rotor by an angle of (360/number of chambers)/n. According to a particular embodiment, two rotary valves **100, 100'** are provided, wherein the rotor **20, 20'** of each valve **100, 100'** has the same number of chambers **22, 22'** (*e.g.,* 1, 2, 3, 4, 5, 6, 7, 8, or more) evenly distributed around the rotor circumference, whereby the rotors are revolutely offset by an angle of (360/number of chambers)/2.

The flow of particulated material may be essentially constant. Ideally there is essentially no change in the flow rate of particulated material. The flow rate, may be measured, for example, as mass / time units (*e.g.* grams per second). The flow rate may be essentially constant. An essentially constant flow or flow rate may provide some tolerance, for instance a maximum variation of $\pm 5$ %, $\pm 10$ %, $\pm 15$ %, $\pm 20$ %, $\pm 25$ % in the flow rate compared with a target value.

The rotors may each have an identical arrangement of chambers, and are in fixed offset by rotation around their central axes by a certain axial angle, beta. **FIG. 8** shows a notation for depicting the revolute offset, beta, between two rotors. The rotor closest to the line of sight **46** in **FIG. 7** is depicted with a smaller profile, the rotor farther from the line of site in **FIG. 7** and behind the first rotor is depicted with a larger profile. The sizes of the profiles do not reflect the rotor sizes; they show the order of rotors from the line of sight **46 (A-A')** in **FIG. 7** onwards. The angle of offset, beta, is shown as the rotation between the smaller and larger profiles.

According to one aspect, beta is set such that, during the rotation cycle of the device, one stator outlet at a time fully opens into a chamber orifice. According to another aspect, beta is set such that, during the rotation cycle of the device, one stator outlet of a pair of stator outlets is open (into a chamber) while the other of the pair is closed (from a chamber). According to another aspect, beta is set such that the chamber orifices of one of a pair of rotors are aligned with the circumferential spaces between the chamber orifices of the other of the pair.

According to another aspect, the chamber orifices on each rotor are arranged in such a way that the total circumferential length of the orifices of each rotor is cumulatively essentially equal to the circumference of one rotor when the rotors have the same diameter, or to the average circumference of the rotors when at least two rotors have different diameters. The chamber orifices on the rotors may be arranged such that they have some overlap or some gaps between, but it is preferred that they have some overlap and most preferred that they touch in a single point.

Preferably, and as shown in **FIGs. 7** and **8** there may be two rotors **20, 20'**, each rotor **20, 20'** provided with 4 chamber **(22a, 22b, 22c, 22'a, 22'b)** each opening into an orifice, said orifices are evenly distributed around the circumference, and the rotors **(20, 20'),** held in co-axial alignment, are offset by angle beta around their respective central axes **(A'A')**. In the case of four chambers per rotor, beta is 45 deg. When the number of chambers per rotor is two, beta is 90 deg; when the number of chambers per rotor is three, beta is 60 deg; when the number of chambers per rotor is four, beta is 45 deg; when the number of chambers is five, beta is 36 deg etc. Generally, speaking, for n rotors having an identical number and distribution of chambers, beta would be (360 / number of chambers)/n. Generally, speaking, for a pair of rotors having an identical number and distribution of chambers, beta would be (360 / number of chambers)/2.

Beta may be set such that the chamber (*e.g.* **22b**) orifices of one **20** of a pair **20, 20'** of rotors aligns with the circumferential spaces (*e.g.* **23'**) between the chamber orifices of the other rotor **20'** of the pair, as show in **FIG. 8**. Most preferably, the arc (delta) of a circumferential space **23** on surface of a rotor **20** delimited by between two chamber **22a, 22b** orifices is equal to or less than the arc (gamma) of the circumferential surface of said rotor **20** delimited by the circumferential edges of a chamber **22a** orifice, as illustrated in **FIG. 9**. When gamma is equal to delta, there is no overlap in the flow between the stator outlets **14, 14',** and flow will be continuous. When gamma is greater than delta, there is an overlap in the flow between the stator outlets **14, 14'** *i.e.* both stator outlets **14, 14'** will briefly discharge at the same time, and flow will be continuous. The circumferential midpoints of the arcs are aligned on the respective rotors.

The arcs of each of the chamber orifices and each of the intervening spaces may have the same value of delta and gamma, the rotors may be identical, the offset, beta, may be set such that the chamber orifices of one rotor align with the spaces between the chamber orifices of the other rotor.

Employing a plurality of rotors allows an increase in chamber volume, which can receive and dispense coarse particulated material. Whatever the size of the material particle, the rotors revolve more slowly compared with rotors of the art, thereby reducing wear and increasing lifespan. The offset rotor alignment provides essentially uninterrupted, metered feed.

The skilled person will appreciate that factors such as rotation speed, reactor throughput and particulated material density will influence the dimensions of the rotor and chambers. An exemplary calculation of rotor dimensions is provided elsewhere herein.

The device has application where a continuous and controlled dispensing of particulated material is needed. The invention is particularly suitable for delivery of a particulated catalyst to a polymerization reactor. As used herein, the term "catalyst" refers to a substance that causes a change in the rate of a polymerization reaction without itself being consumed in the reaction. The invention is especially applicable to catalysts suitable for the polymerization. Preferably, the particulated catalyst is an olefin polymerization catalyst. The catalyst may catalyze the polymerization of ethylene to polyethylene (*i.e.* a ethylene polymerization catalyst). Examples of ethylene polymerization catalysts include metallocene catalysts, chromium and/or Ziegler-Natta catalysts.

The present invention is particularly suitable for supplying catalyst to a polymerization process for preparing polyolefin, and preferably polyethylene, and more preferably for preparing monomodal or bimodal polyethylene.

The feeding device of the present invention may be used for feeding catalyst slurry to a polymerization loop reactor. Olefin polymerization loop reactors, preferably ethylene polymerization loop reactors, suitable for use with the instance device, comprise a plurality of interconnected pipes, defining a reactor path. The reactor comprises one or more lines for introduction of reactants. Preferably, catalyst, and optionally activation agent, is supplied into the reactor by means of a device as described herein.

The feeding device of the present invention may, alternatively, be used for feeding particulated catalyst (granular, flaked or powdered) to a gas phase polymerization system. The device is particularly useful for the introduction of a catalyst into an alpha-olefin polymerization reactor wherein the polymerization is performed under high pressure, and more especially into a gas-phase alpha-olefin polymerization reactor such as for example into a gas-phase fluidized-bed reactor or in a gas-phase stirred reactor. Preferably, said reactor is operated, for example under fluidized bed conditions.

The invention also provides a use of a device as described herein for continuous dispensing of a particulated material for a down stream (subsequent) application. Examples of such uses include addition of additives to a reactor, *e.g.* a polymerization reactor; addition of additives, such as antioxidants, colorants, acid scavengers and the like to a polymer powder before granulation in an extruder. In particular, it provides a use of a device as described herein for continuous dispensing of a catalyst into a polymerization reactor. In particular, it is useful for continuous feeding of a catalyst into an olefin polymerization reactor. In particular, it is useful for continuous feeding of a catalyst into an olefin polymerization reactor for manufacture of polyolefins, such as for example polyethylene (PE) or polypropylene (PP). The invention also provides a use of a device as described herein for dispensing a particulated material, wherein the flow of particulated material is essentially constant.

The device of the present invention is suitable for use with any, if not most kinds of catalyst *i.e.* dry particulated catalyst, or slurry formed from particulated catalyst in the presence of a diluent as mentioned elsewhere herein.

The invention also provides a device **200** as defined herein, for continuously metering catalyst injection into a polymerization reactor. When the polymerization reactor is a gas phase reactor, the catalyst may be a particulated solid such as a powder, granules or flakes. When the polymerization reactor is a slurry reactor, the catalyst may be a slurry.

The invention also provides a method for dispensing a particulated material comprising the steps:

- providing a device **200** having at least two rotary valves **100, 100',** each having a stator **10, 10'** provided with an inlet **12, 12'** and outlet **14, 14'** for the particulated material, and a rotor **20, 20'** seated in the stator **10, 10'** sealing the inlet **12, 12'** from the outlet **14, 14',** each rotor disposed with at least one chamber **22, 22'** for receiving and dispensing the particulated material as the rotor **20, 20'** turns around its central axis **A-A',**

- turning the rotors **20, 20'** synchronously, and

- dispensing particulated material asynchronously from the chambers **22, 22'** of at least two rotors **20, 20',** such that the combined flow of particulated material from the device is essentially continuous.

The method of the invention may utilize a device **200** as described herein.

**EXAMPLE**

Calculation of chamber volume.

A chamber of a rotor may have a volume depending on several factors, including the required dispensing rate, rotor speed, size and application. As a general guidance, the chamber of a rotor may have a volume ranging from about 1 to about 100 cm$^3$, preferably from about 20 to about 70 cm$^3$, more preferably from about 20 to about 100 cm$^3$ when the application is dispensing a catalyst for a polymerization reactor.

A chamber of a rotor may have a volume calculated according to Equation [1]. The volume V is calculated, that is the volume required in one rotation of a device of the invention containing two rotors, for a reactor having a throughput Q (ton/h); a catalyst with a productivity, P (gPE / gcatalyst); a catalyst bulk density MVA (g/cm$^3$); a rotation speed of the rotors, RPM:

$$V = \frac{Q.10^6}{P.MVA.60.RPM} \qquad [1]$$

From V, the volume of each chamber, $V_{CA}$, is calculated in Equation [2] when there are N chambers per rotor and there are 2 rotors:

$$V_{CA} = \frac{V}{2.N} \qquad [2]$$

For spherical chambers, the radius of the chamber, $R_{CA}$, is calculated according to Equation [3]:

$$R_{CA} = \sqrt[3]{\frac{V_{CA}.2}{\frac{4}{3}\pi}} \qquad [3]$$

The positioning of the chambers in one rotor is determined by $\beta_{SET1}$ in Equation [4]

$$\beta_{SET1} = \frac{2\pi}{N} \qquad [4]$$

The positioning of the chambers in the other rotor is determined by $\beta_{SET2}$ in Equation [5] which provides a continuous or essentially continuous flow:

$$\beta_{SET2} = \frac{\pi}{N} \qquad [5]$$

In these conditions, the minimum radius of the rotors, $R_{Cy}$, that is adapted to fit all chambers is calculated approximately using Equation [6]:

$$R_{Cy} \geq \sqrt{R_{CA}^2 + \frac{R_{CA}^2}{Sin^2\left(\frac{\pi}{N}\right)}} \qquad [6]$$

In order to have alignment or overlap between chambers of one rotor with respect to the chambers of the other rotor to achieve continuous metering of catalyst, Equation [7] is respected:

$$R_{Cy} \leq \frac{R_{CA}}{\sin\left(\frac{\pi}{2.N}\right)} \qquad [7]$$

For a reactor throughput, Q, of 30 ton/h, a catalyst with a productivity, P, of 8000 gPE/g catalyst, a catalyst bulk density, MVA, of 0.28 g/cm³, rotation speed, RPM, of 1, two rotors, and 4 chambers per rotor, the resulting volume, V, required in one rotation of the device is 223.2 cm³, the volume of each chamber is 27.9 cm³, the radius, $R_{CA}$, of each chamber is 2.4 cm, the minimum radius of the rotors, $R_{Cy\ min}$, is 3.7 cm, and minimum radius of the rotors, $R_{Cy\ max}$, is 6.1 cm.

**Claims**

1. A device (200) for dispensing a particulated material comprising:

   - at least two rotary valves (100, 100'), each having a stator (10, 10') provided with an inlet (12, 12') and outlet (14, 14') for the particulated material, and a rotor (20, 20') seated in the stator (10, 10') sealing the inlet (12, 12') from the outlet (14, 14'), each rotor disposed with at least one chamber (22, 22') for receiving and dispensing the particulated material as the rotor (20, 20') turns around its central axis (A-A'),
   - wherein the rotors (20, 20') are configured to rotate synchronously,
   - wherein the chambers (22, 22') of at least two rotors (20, 20') are configured to dispense particulated material asynchronously, and
   - wherein the rotors (20, 20') of the device (200) are configured such that the combined flow of particulated material is essentially continuous.

2. Device (200) according to claim 1, wherein a first rotor (20) of said at least two rotors (20, 20') is aligned around its central (A-A') axis with respect to a second rotor (20') of the at least two rotors such that the chambers (22, 22a, 22b) of the first rotor (20) are aligned with the circumferential spaces (23') between the chambers (22', 22'a, 22'b) of the second rotor (20') of the pair.

3. Device (200) according to claim 1, wherein each of the at least two rotors (20, 20') has an identical arrangement of chambers.

4. Device (200) according to any of claims 1 to 3, having two rotary valves (100, 100'), wherein the rotor (20, 20') of each valve (100, 100') is provided with 4 chambers (22, 22') evenly distributed around the rotor circumference and the rotors (20, 20') are in fixed revolute offset by 45 deg around their respective central axes (A-A').

5. Device (200) according to any of claims 1 to 4, wherein each inlet (12, 12') is configured for attachment to an outlet (54, 54') of a hold tank (50) *via* single line or *via* a splitter line (70).

6. Device (200) according to any of claims 1 to 5 wherein the inlet (12, 12') and outlet (14, 14') are diametrically opposed in relation to the centre of the rotor (20, 20') and arranged on an axis vertical and perpendicular to the central axis (A-A') of the rotor, so that the filling and emptying of the chamber is provided by the force of gravity exerted on the particulated material.

7. Device (200) according to any of claims 1 to 6 wherein the central axes (A-A') of the rotors (20, 20') are in co-axial alignment.

8. Device (200) according to any of claims 1 to 7, wherein the rotors (20, 20') are at least partly formed from a metal or metal alloy.

9. Device (200) according to any of claims 1 to 8, wherein a rotor (20, 20') comprises, at least in part, a cylindrical, rounded or truncated-conical region onto which the chambers (22, 22') are disposed.

10. Device (200) according to any of claims 1 to 9, further comprising a pair of sealing rings (28, 28a, 28b) disposed around the circumference of each rotor (20, 20'), flanking the circumferential region on which orifices to the chambers (22, 22a, 22b, 22c) are provided.

11. Device (200) according to claim 10, wherein the sealing rings (28, 28a, 28b) are formed from any of polyamide, polyacetal, polyester, high density polyethylene, polytetrafluoroethylene or aromatic polyketones.

12. Device (200) according to any of claims 1 to 11, wherein the chambers (22, 22') of each rotor (20, 20') are at least partly spherical or ovoidal.

**13.** A method for dispensing particulated material comprising the steps:

- providing a device (200) having at least two rotary valves (100, 100'), each having a stator (10, 10') provided with an inlet (12, 12') and outlet (14, 14') for the particulated material, and a rotor (20, 20') seated in the stator (10, 10') sealing the inlet (12, 12') from the outlet (14, 14'), each rotor disposed with at least one chamber (22, 22') for receiving and dispensing the particulated material as the rotor (20, 20') turns around its central axis (A-A'),
- turning the rotors (20, 20') synchronously,
- dispensing particulated material asynchronously from the chambers (22, 22') of at least two rotors (20, 20'), such that the combined flow of particulated material from the device is essentially continuous.

**14.** Method according to claim 13, wherein the device is as defined in any of claims 1 to 12.

**15.** Use of a device according to any of claims 1 to 12, for dispensing a particulated material, wherein the flow of particulated material is essentially constant.


**Patentansprüche**

**1.** Vorrichtung (200) zur Abgabe eines partikulierten Materials, umfassend:

- mindestens zwei Drehventile (100, 100'), von denen jedes einen Stator (10, 10') aufweist, ausgestattet mit einem Einlass (12, 12') und einem Auslass (14, 14') für das partikulierte Material, und einen Rotor (20, 20'), der im Stator (10, 10') sitzt, der den Einlass (12, 12') vom Auslass (14, 14') abdichtet, wobei jeder Rotor mit mindestens einer Kammer (22, 22') ausgestattet ist, um das partikulierte Material zu empfangen und abzugeben, wenn sich der Rotor (20, 20') um seine zentrale Achse (A - A') dreht,
- wobei die Rotoren (20, 20') konfiguriert sind, um synchron zu rotieren,
- wobei die Kammern (22, 22') von mindestens zwei Rotoren (20, 20') konfiguriert sind, um partikuliertes Material asynchron abzugeben, und
- wobei die Rotoren (20, 20') der Vorrichtung (200) so konfiguriert sind, dass der kombinierte Fluss von partikuliertem Material im Wesentlichen kontinuierlich ist.

**2.** Vorrichtung (200) nach Anspruch 1, wobei ein erster Rotor (20) der mindestens zwei Rotoren (20, 20') um seine zentrale Achse (A - A') mit Bezug auf einen zweiten Rotor (20') der mindestens zwei Rotoren ausgefluchtet ist, so dass die Kammern (22, 22a, 22b, 22b) des ersten Rotors (20) mit den Umfangsräumen (23') zwischen den Kammern (22', 22'a, 22'b) des zweiten Rotors (20') des Paars ausgefluchtet sind.

**3.** Vorrichtung (200) nach Anspruch 1, wobei jeder der mindestens zwei Rotoren (20, 20') eine identische Anordnung von Kammern aufweist.

**4.** Vorrichtung (200) nach einem der Ansprüche 1 bis 3 mit zwei Drehventilen (100, 100'), wobei der Rotor (20, 20') jedes Ventils (100, 100') mit 4 Kammern (22, 22') ausgestattet ist, die gleichmäßig um den Rotorumfang verteilt sind, und die Rotoren (20, 20') sich in einer fixierten Drehversetzung um 45 Grad um ihre entsprechenden Zentralachsen (A - A') befinden.

**5.** Vorrichtung (200) nach einem der Ansprüche 1 bis 4, wobei jeder Einlass (12, 12') für die Befestigung an einen Auslass (54, 54') eines Haltetanks (50) über eine einfache Leitung oder über eine Teilungsleitung (70) konfiguriert ist.

**6.** Vorrichtung (200) nach einem der Ansprüche 1 bis 5, wobei der Einlass (12, 12') und der Auslass (14, 14') mit Bezug auf das Zentrum des Rotors (20, 20') diametral entgegengesetzt liegen und auf einer Achse angeordnet sind, die vertikal und senkrecht zur zentralen Achse (A - A') des Rotors ist, so dass das Füllen und das Leeren der Kammer durch die Schwerkraft bereitgesteellt wird, die auf das partikulierte Material ausgeübt wird.

**7.** Vorrichtung (200) nach einem der Ansprüche 1 bis 6, wobei die zentralen Achsen (A - A') der Rotoren (20, 20') in koaxialer Ausfluchtung sind.

**8.** Vorrichtung (200) nach einem der Ansprüche 1 bis 7, wobei die Rotoren (20, 20') mindestens teilweise aus einem Metall oder einer Metalllegierung gebildet sind.

**9.** Vorrichtung (200) nach einem der Ansprüche 1 bis 8, wobei ein Rotor (20, 20') mindestens teilweise eine zylindrische, abgerundete oder abgeflacht-konische Region aufweist, auf die die Kammern (22, 22') angebracht sind.

**10.** Vorrichtung (200) nach einem der Ansprüche 1 bis 9, weiter umfassend ein Paar Dichtungsringe (28, 28a, 28b), die um den Umfang jedes Rotors (20, 20') angebracht sind, der die Umfangsregion flankiert, auf dem Öffnungen zu den Kammern 22a, 22b, 22c) bereitgestellt sind.

**11.** Vorrichtung (200) nach Anspruch 10, wobei die Dichtungsringe (28, 28a, 28b) aus einem von Polyamid, Polyacetal, Polyester, Polyethylen hoher Dichte, Polytetrafluoroethylen oder aromatischen Polyketonen gebildet sind.

**12.** Vorrichtung (200) nach einem der Ansprüche 1 bis 11, wobei die Kammern (22, 22') jedes Rotors (20, 20') mindestens teilweise sphärisch oder ovoidal sind.

**13.** Verfahren zur Abgabe eines partikulierten Materials, umfassend die folgenden Schritte:

- Bereitstellen einer Vorrichtung (200) mit mindestens zwei Drehventilen (100, 100'), von denen jedes einen Stator (10, 10') aufweist, ausgestattet mit einem Einlass (12, 12') und einem Auslass (14, 14') für das partikulierte Material, und einen Rotor (20, 20'), der im Stator (10, 10') sitzt, der den Einlass (12, 12') vom Auslass (14, 14') abdichtet, wobei jeder Rotor mit mindestens einer Kammer (22, 22') ausgestattet ist, um das partikulierte Material zu empfangen und abzugeben, wenn sich der Rotor (20, 20') um seine zentrale Achse (A - A') dreht,
- synchrones Drehen (20, 20') der Rotoren,
- asynchrones Abgeben des partikulierten Materials aus den Kammern (22, 22') von mindestens zwei Rotoren (20, 20'), so dass der kombinierte Fluss von partikuliertem Material aus der Vorrichtung im Wesentlichen kontinuierlich ist.

**14.** Verfahren nach Anspruch 13, wobei die Vorrichtung wie in einem der Ansprüche 1 bis 12 definiert ist.

**15.** Verwendung einer Vorrichtung nach einem der Ansprüche 1 bis 12 zur Abgabe eines partikulierten Materials, wobei der Fluss von partikuliertem Material im Wesentlichen konstant ist.

**Revendications**

**1.** Dispositif (200) destiné à distribuer une matière particulaire comprenant :

- au moins deux vannes rotatives (100, 100'), ayant chacune un stator (10, 10') muni d'une admission (12, 12') et d'une évacuation (14, 14') pour la matière particulaire, et un rotor (20, 20') logé dans le stator (10, 10') et séparant l'admission (12, 12') de l'évacuation (14, 14'), chaque rotor étant prévu avec au moins une chambre (22, 22') destinée à recevoir et à distribuer la matière particulaire lorsque le rotor (20, 20') tourne autour de son axe central (A-A'),
- dans lequel les rotors (20, 20') sont configurés pour tourner de manière synchrone,
- dans lequel les chambres (22, 22') d'au moins deux rotors (20, 20') sont configurées pour distribuer la matière particulaire de manière asynchrone, et
- dans lequel les rotors (20, 20') du dispositif (200) sont configurés de sorte que le flux combiné de matière particulaire soit essentiellement continu.

**2.** Dispositif (200) selon la revendication 1, dans lequel un premier rotor (20) desdits au moins deux rotors (20, 20') est aligné autour de son axe central (A-A') par rapport à un second rotor (20') des au moins deux rotors de sorte que les chambres (22, 22a, 22, 22b) du premier rotor (20) soient alignées avec les espaces circonférentiels (23') entre les chambres (22', 22'a, 22'b) du second rotor (20') de la paire.

**3.** Dispositif (200) selon la revendication 1, dans lequel chacun des au moins deux rotors (20, 20') possède un agencement de chambres identique.

**4.** Dispositif (200) selon l'une quelconque des revendications 1 à 3, ayant deux vannes rotatives (100, 100'), dans lequel le rotor (20, 20') de chaque vanne (100, 100') est muni de 4 chambres (22, 22') réparties de manière homogène autour de la circonférence du rotor, et les rotors (20, 20') sont, en cas de rotation fixe, décalés à 45 degrés autour de leurs axes centraux respectifs (A-A').

**5.** Dispositif (200) selon l'une quelconque des revendications 1 à 4, dans lequel chaque admission (12, 12') est configurée pour être reliée à une évacuation (54, 54') d'une cuve de conservation (50) par le biais d'un seul conduit ou d'un conduit de séparation (70).

**6.** Dispositif (200) selon l'une quelconque des revendications 1 à 5, dans lequel l'admission (12, 12') et l'évacuation (14, 14') sont diamétralement opposées par rapport au centre du rotor (20, 20') et prévues sur un axe vertical et perpendiculaire à l'axe central (A-A') du rotor, de sorte que le remplissage et le vidage de la chambre soient assurés par la force de gravité exercée sur la matière particulaire.

**7.** Dispositif (200) selon l'une quelconque des revendications 1 à 6, dans lequel les axes centraux (A-A') des rotors (20, 20') sont en alignement coaxial.

**8.** Dispositif (200) selon l'une quelconque des revendications 1 à 7, dans lequel les rotors (20, 20') sont au moins partiellement formés d'un métal ou d'un alliage métallique.

**9.** Dispositif (200) selon l'une quelconque des revendications 1 à 8, dans lequel un rotor (20, 20') comprend, au moins en partie, une zone cylindrique, arrondie ou tronconique sur laquelle les chambres (22, 22') sont disposées.

10. Dispositif (200) selon l'une quelconque des revendications 1 à 9, comprenant en outre une paire de bagues d'étanchéité (28, 28a, 28b) disposée autour de la circonférence de chaque rotor (20, 20'), et entourant la zone circonférentielle sur laquelle des orifices menant aux chambres (22, 22a, 22b, 22c) sont prévus.

11. Dispositif (200) selon la revendication 10, dans lequel les bagues d'étanchéité (28, 28a, 28b) sont formées de n'importe lequel de polyamide, de polyacétal, de polyester, de polyéthylène à haute densité, de polytétrafluoroéthylène ou de polycétones aromatiques.

12. Dispositif (200) selon l'une quelconque des revendications 1 à 11, dans lequel les chambres (22, 22') de chaque rotor (20, 20') sont au moins partiellement sphériques ou ovoïdes.

13. Procédé de distribution d'une matière particulaire comprenant les étapes consistant à :

- prévoir un dispositif (200) ayant au moins deux vannes rotatives (100, 100'), ayant chacune un stator (10, 10') muni d'une admission (12, 12') et d'une évacuation (14, 14') pour la matière particulaire, et un rotor (20, 20') contenu dans le stator (10, 10') et séparant l'admission (12, 12') de l'évacuation (14, 14'), chaque rotor étant muni d'au moins une chambre (22, 22') destinée à recevoir et à distribuer la matière particulaire lorsque le rotor (20, 20') tourne autour de son axe central (A-A'),
- faire tourner les rotors (20, 20') de manière synchrone,
- distribuer la matière particulaire de manière asynchrone depuis les chambres (22, 22') d'au moins deux rotors (20, 20'), de sorte que le flux combiné de matière particulaire provenant du dispositif soit essentiellement continu.

14. Procédé selon la revendication 13, dans lequel le dispositif est tel que défini dans l'une quelconque des revendications 1 à 12.

15. Utilisation d'un dispositif selon l'une quelconque des revendications 1 à 12, pour distribuer une matière particulaire, le flux de matière particulaire étant essentiellement constant.

**FIG. 1**

**FIG. 2**

FIG. 3

FIG. 4

FIG. 5

FIG. 5A

FIG. 6

FIG. 7

22,22a

20

23

22',22'a

22,22b

23'

20'

22',22'b

β

FIG. 8

22,22c

20

22,22a

γ

δ

23

22,22b

FIG. 9

22"a

22"b

20"

ε

FIG. 10

**EP 2 794 082 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5738249 A